# EUROPEAN PATENT SPECIFICATION

(11) **EP 0 836 558 B1**
(45) Date of publication and mention of the grant of the patent: **28.06.2000**
(21) Application number: 97924994.3
(22) Date of filing: 27.05.1997
(51) Int. Cl.: B60J 5/00, E05D 15/50, B62D 31/00

(54) **A THREE-DOOR MOTOR VEHICLE**
MOTORFAHRZEUG MIT DREI TÜREN
VEHICULE AUTOMOBILE A TROIS PORTES

(30) Priority: 29.05.1996 IT TO960123 U
(43) Date of publication of application: 22.04.1998
(73) Proprietor: Fioravanti S.r.l., 10121 Torino (IT)
(72) Inventor: FIORAVANTI, Leonardo, I-10024 Moncalieri (IT)
(74) Representative: Jacobacci, Filippo
(86) International application number: EP9702730
(87) International publication number: WO9745282

(56) References cited:
- EP-A- 0 482 563
- EP-A- 0 618 129
- DE-A- 19 533 780
- DE-B- 1 010 391
- GB-A- 630 869
- PATENT ABSTRACTS OF JAPAN vol. 013, no. 318 (M-852), 19 July 1989 & JP 01 103535 A (SUZUKI MOTOR CO LTD), 20 April 1989,

## Description

The present invention concerns a three-door motor vehicle having two side doors, one for each side, and a rear door.

The motor vehicle is of the type in which each of the two side door is symmetrical about a substantially vertical axis, and the two edges of each side door are releasably connected by unlockable locking means to corresponding supports hinged to the corresponding sides of the opening in the vehicle body, whereby each door may be opened selectively by turning about the hinge axis of either of the two said hinged supports.

A motor vehicle provided with two side doors of the type described above is known from Italian Patent Application No. T094A000716.

This motor vehicle enables the manufacturer to provide a single type of side door which can be used on both the left and right sides of the motor vehicle, instead of the two mirror-imaged side doors normally used in motor vehicles having two side doors.

In addition, the fact that each of the two side doors can be opened in both directions facilitates passenger access, particularly to the rear seat of the motor vehicle.

The object of the present invention is to provide a three-door motor vehicle of the type described above which enables the number of parts needed for the manufacture of such doors to be reduced and, consequently, the production costs to be lowered.

This aim is achieved by means of a motor vehicle having the characteristics defined in Claim 1.

Further reductions in the production costs of the motor vehicle are achieved by way of the characteristics defined in Claims 2 and 3.

The invention will now be described with reference to the accompanying drawings, given by way of non-limitative example, in which:

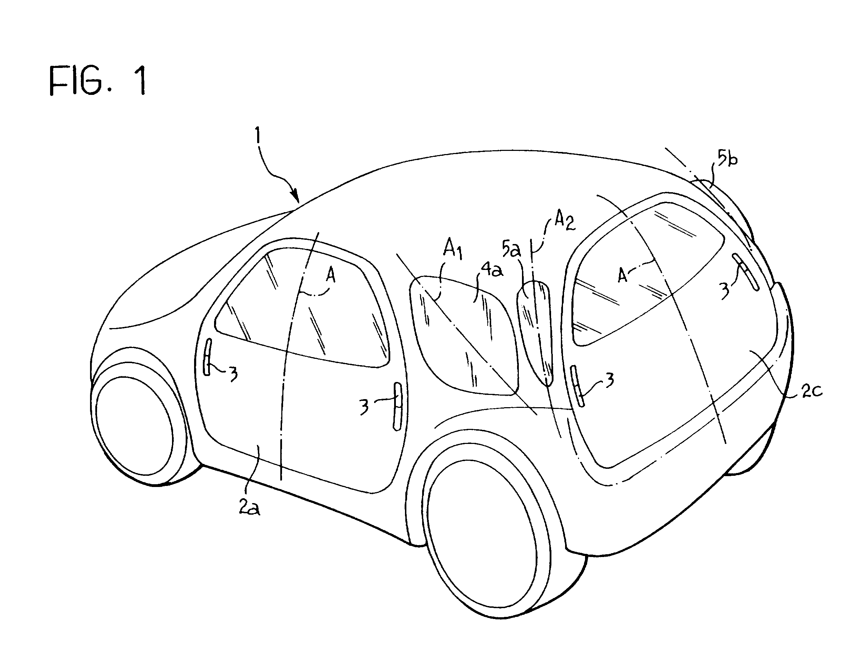

Figure 1 is a perspective view of the rear three quarters of the left side of a three-door motor vehicle according to the invention; and

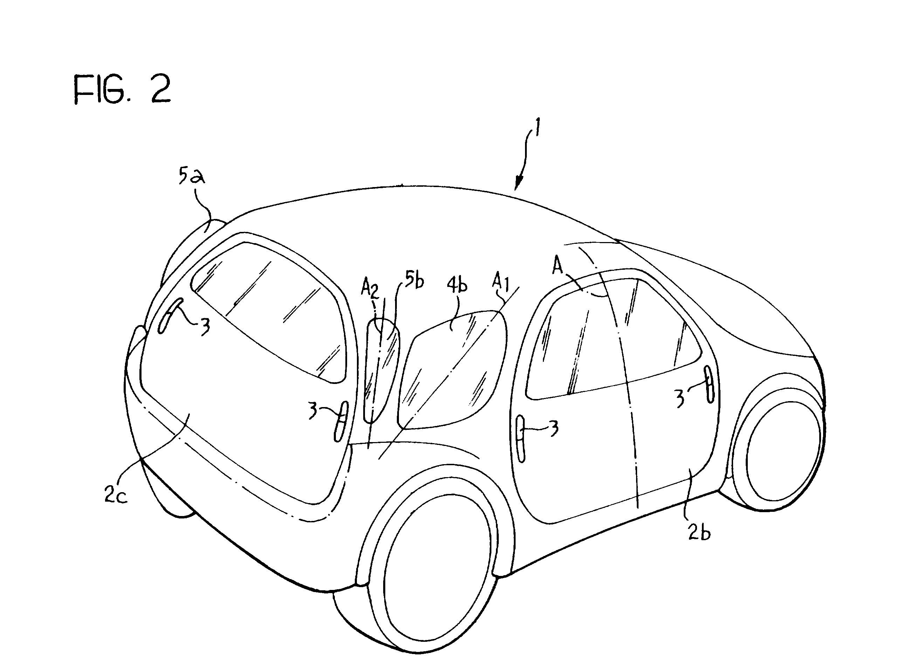

Figure 2 is a perspective view of the rear three quarters of the right side of the motor vehicle illustrated in Figure 1.

The reference numeral 1 generally indicates a three-door motor vehicle having a left side door 2a, a right side door 2b, and a rear door 2c.

Each of the three doors has a substantially vertical axis of symmetry A and the three doors 2a, 2b and 2c are identical.

Each door has a handle 3 adjacent each of its two edges, and has a mechanism of the type known from Italian Patent Application No. T094A000716 which enables it to be opened in both directions with the aid of one or other of the two handles 3.

In conformity with the description and illustration of the above prior application, the two edges of each door are releasably connected by unlockable locking means, operated by the respective handles 3, to corresponding supports hinged to the corresponding sides of the opening in the bodywork so that each door can be opened selectively by turning about the hinge axis of either of the said two hinged supports.

Two rear side windows of the motor vehicle are indicated 4a and 4b, each having an axis of symmetry A1. The left window 4a is identical with the right window 4b.

Two rear lights of the motor vehicle are indicated 5a and 5b, each having an axis of symmetry A2. The left rear light 5a is identical with the right rear light 5b.

From the preceding description, it is clear that the present invention substantially reduces the production costs of the motor vehicle by reducing the number of parts necessary for its manufacture.

## Claims

1. A three-door motor vehicle including two side doors (2a, 2b), one for each side, and a rear door (2c), in which each of the two side doors (2a, 2b) is symmetrical about a substantially vertical axis (A), and the two edges of each side door are releasably connected by unlockable locking means to corresponding supports hinged to the corresponding sides of the opening in the vehicle body whereby each of the side doors (2a, 2b) can be opened selectively by turning about the hinge axis of either of the two said hinged supports, characterised in that the rear door (2c) has the same characteristics as the two side doors (2a, 2b) and the three doors (2a, 2b, 2c) are identical.

2. A motor vehicle according to Claim 1, characterised in that each of the two rear side windows (4a, 4b) has an axis of symmetry (A1) and the right window (4b) is identical with the left window (4a).

3. A motor vehicle according to claim 1, characterised in that each of the two rear lights (5a, 5b) has an axis of symmetry (A2) and the right rear light (5b) is identical with left rear light (5a).

## Patentansprüche

1. Dreitüriges Kraftfahrzeug mit zwei Seitentüren (2a, 2b), u.zw. einer pro Seite, und einer Rückwandtür (2c), bei welchem jede der beiden Seitentüren (2a, 2b) symmetrisch um eine im wesentlichen vertikale Achse (A) ist und die beiden Ränder jeder Seitentür mittels entarretierbarer Blockiermittel lösbar mit entsprechenden Trägern verbunden sind, die an den entsprechenden Seiten der Öffnung im Fahrzeugkörper angelenkt sind, wobei jede der Seitentüren (2a, 2b) durch Drehen um die Anlenkachse eines der beiden angelenkten Träger selektiv geöffnet werden kann, dadurch gekennzeichnet, dass die Rückwandtür (2c) dieselben Merkmale wie die beiden Seitentüren (2a, 2b) aufweist und die drei Türen (2a, 2b, 2c) identisch sind.

2. Kraftfahrzeug nach Anspruch 1, dadurch gekennzeichnet, dass jedes der beiden Rückwandfenster (4a, 4b) eine Symmetrieachse (A1) aufweist und das rechte Fenster (4b) identisch mit dem linken Fenster (4a) ist.

3. Kraftfahrzeug nach Anspruch 1, dadurch gekennzeichnet, dass jedes der beiden Rücklichter (5a, 5b) eine Symmetrieachse (A2) aufweist und das rechte Rücklicht (5b) identisch mit dem linken Rücklicht (5a) ist.

## Revendications

1. Véhicule à moteur à trois portes comprenant deux portes latérales (2a, 2b), une de chaque côté, et une porte arrière (2c), dans lequel chacune des deux portes latérales (3a, 2b) est symétrique autour d'un axe sensiblement vertical (A), et les deux bords de chaque porte latérale sont reliés de façon libérable par des moyens de blocage pouvant être déverrouillés à des supports correspondants articulés sur les côtés correspondants de l'ouverture dans la carrosserie du véhicule, de telle sorte que chacune des portes latérales (2a, 2b) peut être ouverte de manière sélective en tournant autour de l'axe de charnière de l'un des deux dits supports articulés, caractérisé en ce que la porte arrière (2c) a les mêmes caractéristiques que les deux portes latérales (2a, 2b) et les trois portes (2a, 2b, 2c) sont identiques.

2. en ce que chacune des deux fenêtres latérales arrière (4a, 4b) a un axe de symétrie (A1) et la fenêtre droite (4b) est identique à la fenêtre gauche (4a).

3. Véhicule à moteur selon la revendication 1, caractérisé en ce que chacun des deux feux arrière (5a, 5b) a un axe de symétrie (A2) et le feu arrière droit (5b) est identique au feu arrière gauche (5a).
